(19) Europäisches Patentamt
European Patent Office
Office européen des brevets

(11) Publication number: **0 099 694**
**B1**

(12) # EUROPEAN PATENT SPECIFICATION

(45) Date of publication of patent specification: **09.04.86**

(51) Int. Cl.$^4$: **C 07 C 103/70**, C 08 F 20/60, C 02 F 1/54

(21) Application number: **83303882.1**

(22) Date of filing: **04.07.83**

(54) **High charge density, cationic methacrylamide based monomers and their polymers.**

(30) Priority: **06.07.82 US 395420**

(43) Date of publication of application:
**01.02.84 Bulletin 84/05**

(45) Publication of the grant of the patent:
**09.04.86 Bulletin 86/15**

(84) Designated Contracting States:
**BE CH DE FR GB IT LI NL**

(56) References cited:
**US-A-3 766 156**
**US-A-4 218 554**

(73) Proprietor: **CELANESE CORPORATION**
**1211 Avenue of the Americas**
**New York New York 10036 (US)**

(72) Inventor: **Dammann, Laurence G.**
**5604 Montford Lane**
**Crestwood Kentucky (US)**

(74) Representative: **De Minvielle-Devaux, Ian Benedict Peter et al**
**CARPMAELS & RANSFORD 43, Bloomsbury Square**
**London WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to novel acrylamide or methacrylamide monomers and polymers. More particularly, the present invention relates to bis-quaternary ammonium acrylamide or methacrylamide monomers and polymers.

Quaternary ammonium monomers of the acrylamide or methacrylamide type are set out in United States Patents Nos. 3,666,810, 4,180,643 and 4,212,820. United States Patent No. 3,962,332 discloses a di-olefinically unsaturated compound which contains two quaternary ammonium moieties. The polymers and co-polymers of the bis-quaternary compounds are characterised by high charge density, and find application as flocculants, paper sizes and electroconductive aids. United States Patents Nos. 3,689,468, 3,766,156 and 4,009,201 disclose acrylic acid ester monomers and polymers containing a bis-quaternary ammonium halide group for use in a variety of environments, including anti-static agents and flocculants. These compounds, however, contain a hydrolytically unstable ester linkage which renders the polymers formed from those cationic monomers unsuitable for use in aqueous systems.

With reference to British patent application No. 2,091,320, Netherlands patent application No. 8200009, and German (Federal Republic) patent application No. 3,200,022, the applicant has voluntarily limited the scope of the present application, and submitted separate claims for the United Kingdom, Netherlands and German (Federal Republic). These applications disclose one of the homopolymers which are the subject of this application for use in modifying the fluid flow properties of a porous, permeable formation.

The present invention surprisingly provides new stable novel cationic monomers which have unique usefulness in areas of application for which the known most closely related materials are unsuitable.

Accordingly, the present invention provides a new class of cationic acrylamides and methacrylamides which are useful for a wide variety of purposes normally requiring ionic charged monomers of this general type.

The invention provides acrylamide and methacrylamide monomers characterised by the following formula:

$$\begin{array}{cccccccccccccc} & & R_1 & & & & R_2 & & R_3X^- & & OH & & R_5Y^- & \\ & & | & & & & | & & | & & | & & | & \\ CH_2 & = & C & - & C & - & N & -(C_nH_{2n})- & N^+ & -CH_2- & CH & -CH_2- & N^+ & -R_7 \\ & & & & \| & & & & | & & & & | & \\ & & & & O & & & & R_4 & & & & R_6 & \end{array} \qquad (I)$$

wherein $R_1$ and $R_2$ are hydrogen or methyl, $R_3$, $R_4$, $R_5$, $R_6$ and $R_7$ are alkyls of 1 to 4 carbon atoms, n is an integer ranging from 1 to 6 and X and Y are the same or different anions.

A preferred monomer of the above defined class of unsaturated bis-quaternary organic compounds can, for example, be synthesised by reacting a 1-chloro-2-hydroxypropyl trimethylammonium halide (e.g., chloride, bromide, fluoride or iodide) with dimethylaminopropylacrylamide or with dimethylaminopropylmethacrylamide.

The synthesis can be conducted conveniently by dissolving the reactants in water or other inert polar solvent such as alcohol (for example methanol, ethanol, isopropanol, butanol), benzene toluene, xylene, acetonitrile, dimethylformamide, tetrahydrofuran, acetone or dioxane. Mixtures of water and one of the organic solvents mentioned, whether miscible with the water or not, may be used. Preferably the reaction mixture is heated to a temperature in the range from 40°C up to the refluxing temperature of the reaction mixture. The time of reaction varies between several minutes and several hours depending mainly on the reaction temperature. The reactants are usually employed in approximately equimolar proportions. It is advantageous to maintain the pH of the system at about 7 so as to prevent hydrolysis of amido groups in the compounds.

It is a particular advantage of the compounds of the present invention that they do not contain easily hydrolysable ester groups.

By the method of synthesis described above, there are produced compounds of structural formula I in which the anions are of the halide type. These anions can be replaced with other anions by conventional techniques such as by contacting the quaternary halides with an appropriate ion exchange resin. Examples of various anions for X and Y include hydroxide, nitrate, sulfate, sodium acid sulfate, chromate, phosphate, methyl sulfate, acetate, formate, oxalate, sulfamate and acrylate.

The unsaturated bis-quaternary monomeric compounds of the present invention are readily polymerisable, and the aqueous solutions resulting from the above-described synthesis can be employed directly for this purpose. Any known polymerisation initiator of the free radical type may be selected for use, such as t-butyl hydroperoxide, ammonium persulfate, alkali metal persulfates, the tetra sodium salt of ethylene diamine tetraacetic acid (EDTA), and 2,2'-Azobis(2-amidinopropane)hydrochloride and mixtures thereof. The initiator is usually effective in quantities between 0.01% and 5% by weight, based on the weight of the unsaturated bis-quaternary monomer. A redox initiator system can be provided by including a reducing agent such as sodium hydrosulfite in the initiator system.

These new unsaturated bis-quaternary compounds can be co-polymerised with any other polymerisable olefinically unsaturated monomer, preferably in aqueous solution and emulsion

polymerisation systems with redox initiation. Highly preferred co-polymers of the present invention, which exhibit outstanding properties for application as flocculants and electroconductive aids, are those comprising acrylamide co-polymerised with an unsaturated bis-quaternary compound of structural Formula (I). Any other water-soluble monomer can be co-polymerised with the monomer of Formula (I). Preferred water-soluble monomers include acrylic and methacrylic acid, hydroxyethyl acrylate or methacrylate, hydroxypropyl acrylate or methacrylate, N-methylol acrylamide, N-monoalkyl and -dialkyl acrylamides and methacrylamides.

An alternative method for producing co-polymers containing the monomer of Formula (I) is by reacting a polymerisable monomer such as the preferred acrylamide with dimethylaminopropylacrylamide or with dimethylaminopropylmethacrylamide. The co-polymer so produced may then be quaternised by reaction with 1-chloro-2-hydroxypropyl trimethylammonium halide.

The co-polymers can generally contain from 0.1% to 95% of a co-monomer. However, the preferred range for most applications is limited to 5% to 70% of a co-monomer, where water-solubility and high charge densities are controlling factors and require the presence of a high population of quaternary groups in the co-polymers.

The polymers and co-polymers of the present invention are viscous to solid resinous materials of water-soluble character. They are generally also partially soluble or dispersible in polar organic solvents, for example methanol, acetonitrile or tetrahydrofuran. The molecular weight of the polymers and co-polymers is generally in the range from 20,000 to 2,000,000, preferably at least 500,000.

It is an important feature of the present invention that the monomers having structural Formula (I) do not contain ester linkages, and therefore homo-polymers and co-polymers thereof exhibit outstanding resistance to hydrolysis and chemical degradation. The polymers and co-polymers are therefore verstile in a wide range of applications under extreme conditions of temperature and chemical environment.

A polymeric composition of the present invention can be incorporated into paper pulp to render it electroconductive for the production of paper stock for electrostatic image reproduction systems. For example 0.1% to 10% by weight of the polymer, based on dry fibre weight, can be added to the wood pulp. Pigments and other additives known and used in the paper art can be included.

The polymeric compositions of the present invention are suitable for application for paper sizing and as wet strength agents. Co-polymers containing from 0.1% to 20% by weight of bis-quaternary compounds of structural Formula (I) are useful for forming films and coatings having resistance to development of electrostatic charges.

The water-soluble polymeric compositions are generally useful as flocculants, particularly the polymeric compositions containing at least 60% by weight of the bis-quaternary compounds of structural Formula (I). The addition of 0.01% to 10% by weight of polymer, based on the weight of suspended solids (e.g., sewage sludge or paper pulp effluent) serves to flocculate the suspended matter and facilitate filtration procedures.

The following Examples are further illustrative of the present invention. The reactants and other specific ingredients are presented as being typical, and various modifications within the scope of the invention can be devised in view of the foregoing disclosure.

## Example I

To 255 g (1.5 moles) of dimethylaminopropyl methacrylamide (DMAPMA of Texaco Chemical Co.) is added 578.6 g (1.5 moles) of 50.2% aqueous 1-chloro-2-hydroxypropyl trimethylammonium chloride (Quat 188 of Dow Chemical Co.). ("Quat" is a registered trade mark). The resulting solution is heated at 70°C for 4 hours. The resulting bis-quaternary monomer has a solids content of 74.6% and a pH of 8.1. The calculated monomer content is 65.4%.

## Example II

To 255 g (1.5 moles) DMAPMA is added 555 g (1.5 moles) 51.5% active Quat 188. The solution is heated at 80°C for 4 hours with a nitrogen sparge during the last 20 minutes. To this is added 0.1 g tetra sodium salt of EDTA and 0.4 g 2,2′-Azobis (2-amidinopropane) hydrochloride (V—50 catalyst of Crescent Chemical Co.) in 10 ml $H_2O$. Heating is continued at 80°C under $N_2$ sparge for 4 hours. A total of 400 g of $H_2O$ is added during this time to reduce the viscosity. A second 0.2 g of 2,2′-Azobis (2-amidinopropane) hydrochloride in 5 ml $H_2O$ is added and heating is continued for 2 hours more at 80°C under $N_2$. Another 100 g $H_2O$ is added during this period. On cooling a viscous, amber polymer solution results with a pH of 7.2. The % NV is 47.2% with a calculated polymer content of 40.8%.

## Example III

The following is charged to a 2 litre 3-neck flask:

70 g $H_2O$
100 g 50% Aqueous Acrylamide
229 g Bis-quaternary monomer of Example I
0.1 g $Na_4EDTA$

The solution is sparged with $N_2$ for 20 minutes while heating to 80°C. 2,2′-Azobis (2-amidinopropane) hydrochloride, 0.2 g in 1 ml $H_2O$, is added and heating is continued at 80°C for 2 hours under $N_2$. A total of 500 g $H_2O$ is added. A second 0.1 g of 2,2′-Azobis (2-amidinopropane) hydrochloride is added and heating is continued at 80°C for 2 hours more under $N_2$. A total of 100 g $H_2O$ is added during the second heating period. On cooling a viscous, amber co-polymer solution with a pH of 6.9 results. The % NV is 22.7% with a calculated polymer content of 20%.

Example IV

To demonstrate the superior flocculation activity of polymers containing the monomers of the present invention, a homo-polymer of this invention is compared to a homo-polymer of the prior art. The homo-polymer of the prior art is based on the following monomer (United States Patent No. 3,766,156):

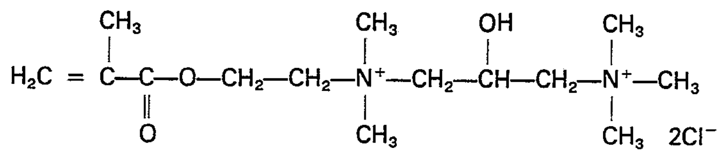

which contains a hydrolytically unstable ester linkage. Both homo-polymers are evaluated on an Erie iron ore slime for their clarification efficiency. A 100 ml cylinder is filled with the iron ore slime and the polymer dosage is added. After inverting 5 times, it is allowed to stand 5 minutes. An aliquot is then taken and the tubidity is measured in ppm using a Hach Model 2100A Turbidimeter.

| | Erie Slimes, Turbidity in ppm | |
|---|---|---|
| Dosage ppm | Amide Based Bis-quat Homopolymer Example II | Ester Based Bis-quat Homopolymer |
| 2 | 370 | 1840 |
| 4 | 340 | 495 |
| 6 | 240 | 176 |

It can be seen that the amide based bis-quat homo-polymers of this invention give superior clarity at lower dosage levels.

Example V

The amide based bis-quat homo-polymer of Example II is compared to a prior art amide based quat homo-polymer based on the monomer:

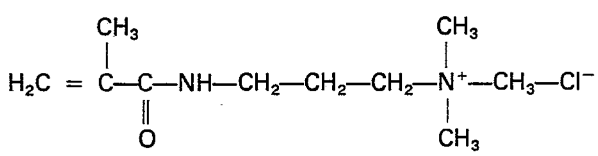

(This monomer, which is based on methacrylamide, and the polymer derived therefrom are very similar to the acrylamide-based monomer and polymer described at the top of page 6 of GB—A—1 590 345.)

They are compared for their ability to inhibit the swelling of 100 mesh bentonite clay particles. To 90 ml of water containing a dosage of polymer is slurried 10 g of 100 mesh bentonite. The slurry is hot rolled at 150°F (65.5°C) overnight then sieved to isolate the bentonite. The bentonite is dried and weighed. For complete inhibition all the bentonite is recovered and its texture is much the same as that originally added.

Clay Swell Inhibition

| | Minimum Usage Level for Complete Inhibition |
|---|---|
| Amide based bis-quat homo-polymer (Example II) | 1% |
| Amide based quat homopolymer of prior art | 2% |

Again the superior properties of polymers of this invention are demonstrated by their lower usage levels.

**Claims for the Contracting States: BE, FR, IT and CH/LI**

1. A compound of the formula I:

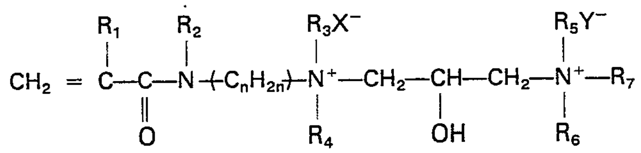

(I)

wherein: $R_1$ and $R_2$ are hydrogen or methyl;
$R_3$, $R_4$, $R_5$, $R_6$ and $R_7$ are the same or different alkyls of 1 to 4 carbon atoms;
n is an integer ranging from 1 to 6; and
X and Y are the same or different anions.

2. A compound of claim 1 in which X and Y are halogen ions.

3. A homopolymer of a compound of claim 1 or claim 2.

4. A copolymer of a compound of claim 1 or claim 2 with acrylic acid, methacrylic acid, hydroxyethylacrylate, hydroxyethylmethacrylate, N-methylol acrylamide, an N-monoalkyl acrylamide, an N-dialkyl acrylamide, an N-monoalkyl methyacrylamide, or an N-dialkylmethacrylamide.

5. A copolymer of a compound of claim 1 or claim 2 with acrylamide.

6. Use of a compound of claim 1 or claim 2 in the production of a copolymer by reaction with at least one other olefinically unsaturated monomer.

7. Use of a compound of claim 1 or claim 2 according to claim 6, wherein the or each other olefinically unsaturated monomer is water-soluble.

8. Use of a homopolymer of claim 3 or a copolymer of claim 4 or claim 5, for rendering paper electroconductive, as a paper wet strength agent, or as a flocculant.

**Claims for the Contracting States: DE, NL, GB**

1. A copolymer of a compound of the formula I:

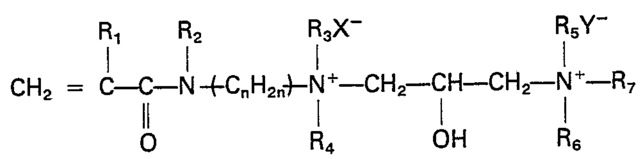

(I)

wherein: $R_1$ and $R_2$ are hydrogen or methyl;
$R_3$, $R_4$, $R_5$, $R_6$ and $R_7$ are the same or different alkyls of 1 to 4 carbon atoms;
n is an integer ranging from 1 to 6; and
X and Y are the same or different anions,
with acrylamide, acrylic acid, methacrylic acid, hydroxyethylacrylate, hydroxyethylmethacrylate, N-methylol acrylamide, an N-monoalkyl acrylamide, an N-dialkyl acrylamide, an N-monoalkyl methacrylamide, or an N-dialkylmethacrylamide.

2. The copolymer of claim 1, wherein the comonomer is acrylamide.

3. The copolymer of claim 1 or claim 2, wherein X and Y are halogen ions.

4. A compound of the formula I as defined in claim 1, provided that when $R_1$, $R_3$, $R_4$, $R_5$, $R_6$ and $R_7$ are all methyl, $R_2$ is hydrogen and n is 3, then one of the anions X or Y is not chlorine.

5. The compound of claim 4 wherein X and Y are halogen ions.

6. A homopolymer of the compound of claim 4 or claim 5.

7. Use of a compound of the formula I as defined in claim 1 in the production of a copolymer by reaction with at least one other olefinically unsaturated monomer.

8. Use according to claim 7, wherein the or each other olefinically unsaturated monomer is water-soluble.

9. Use of a homopolymer of a compound of the formula I as defined in claim 1 or copolymer according to any one of claims 1 to 3, for rendering paper electroconductive, as a paper wet strength agent, or as a flocculant.

**Patentansprüche für du Vertragsstaaten: BE, CH, LI, FR, IT**

1. Verbindung der Formel I

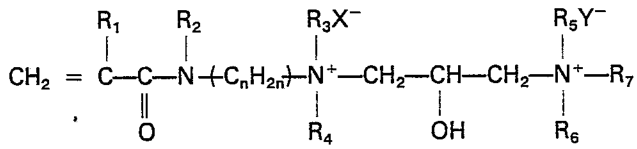
(I)

in der

$R_1$ und $R_2$ Wasserstoff oder Methyl sind,
$R_3$, $R_4$, $R_5$, $R_6$ und $R_7$ gleiche oder verschiedene AlkylGruppen mit 1 bis 4 Kohlenstoff-Atomen sind,
n eine ganze Zahl im Bereich von 1 bis 6 ist und
X und Y die gleichen oder verschiedene Anionen sind.

2. Verbindung nach Anspruch 1, dadurch gekennzeichnet, daß X und Y Halogen-Ionen sind.

3. Homopolymer einer Verbindung nach Anspruch 1 oder Anspruch 2.

4. Copolymer einer Verbindung nach Anspruch 1 oder Anspruch 2 mit Acrylsäure, Methacrylsäure, Hydroxyethylacrylat, Hydroxyethylmethacrylat, N-Methylolacrylamid, einem N-Monoalkylacrylamid, einem N-Dialkylacrylamid, einem N-Monoalkylmethacrylamid oder einem N-Dialkylmethacrylamid.

5. Copolymer einer Verbindung nach Anspruch 1 oder Anspruch 2 mit Acrylamid.

6. Verwendung einer Verbindung nach Anspruch 1 oder Anspruch 2 bei der Herstellung eines Copolymers durch Reaktion mit wenigstens einem anderen olefinisch ungesättigten Monomer.

7. Verwendung nach Anspruch 6 einer Verbindung nach Anspruch 1 oder Anspruch 2, dadurch gekennzeichnet, daß das oder jedes andere olefinisch ungesättigte Monomer wasserlöslich ist.

8. Verwending eines Homopolymers nach Anspruch 3 oder eines Copolymers nach Anspruch 4 oder Anspruch 5 zum Ausstatten von Papier mit elektrischer Leitfähigkeit, als Naßfestigkeits-Mittel für Papier oder als Flockungsmittel.

**Patentansprüche für du Vertragsstaaten: DE, GB, NL**

1. Copolymer einer Verbindung der Formel I

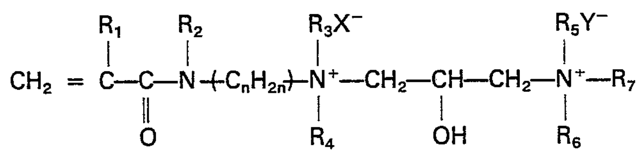
(I)

in der

$R_1$ und $R_2$ Wasserstoff oder Methyl sind,
$R_3$, $R_4$, $R_5$, $R_6$ und $R_7$ gleiche oder verschiedene AlkylGruppen mit 1 bis 4 Kohlenstoff-Atomen sind,
n eine ganze Zahl im Bereich von 1 bis 6 ist und
X und Y die gleichen oder verschiedene Anionen sind,

mit Acrylamid, Acrylsäure, Methacrylsäure, Hydroxyethylacrylat, Hydroxyethylmethacrylat, N-Methylolacrylamid, einem N-Monoalkylacrylamid, einem N-Dialkylacrylamid, einem N-Monoalkylmethacrylamid oder einem N-Dialkylmethacrylamid.

2. Copolymer nach Anspruch 1, dadurch gekennzeichnet, daß das Comonomer Acrylamid ist.

3. Copolymer nach Anspruch 1 oder Anspruch 2, dadurch gekennzeichnet, daß X und Y Halogen-Ionen sind.

4. Verbindung der Formel I nach Anspruch 1, mit der Maßgabe, daß, wenn $R_1$, $R_3$, $R_4$, $R_5$, $R_6$ und $R_7$ sämtlich Methyl sind, $R_2$ Wasserstoff ist, und n 3 ist, eines der Anionen X oder Y nicht Chlor ist.

5. Verbindung nach Anspruch 4, dadurch gekennzeichnet, daß X und Y Halogen-Ionen sind.

6. Homopolymer der Verbindung nach Anspruch 4 oder Anspruch 5.

7. Verwendung einer Verbindung der Formel I nach Anspruch 1 bei der Herstellung eines Copolymers durch Reaktion mit wenigstens einem anderen olefinisch ungesättigten Monomer.

8. Verwendung nach Anspruch 7, dadurch gekennzeichnet, daß das oder jedes andere olefinisch ungesättigte Monomer wasserlöslich ist.

9. Verwendung eines Homopolymers einer Verbindung der Formel I nach Anspruch 1 oder eines Copolymers nach irgendeinem der Ansprüche 1 bis 3 zum Ausstatten von Papier mit elektrischer Leitfähigkeit, als Naßfestigkeits-Mittel für Papier oder als Flockungsmittel.

**Revendications pour les Etats contractants: BE, CH, LI, FR, IT**

1. Un composé de formule I:

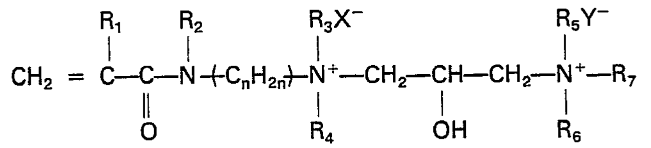

(I)

dans laquelle: $R_1$ et $R_2$ sont hydrogène ou méthyle;

$R_3$, $R_4$, $R_5$, $R_6$ et $R_7$ sont des alcoyles identiques ou différents de 1 à 4 atomes de carbone;

n est un nombre entier compris entre 1 et 6; et

X et Y sont des anions identiques ou différents.

2. Un composé de la revendication 1 dans lequel X et Y sont des ions halogènes.

3. Un homopolymère d'un composé de la revendication 1 ou la revendication 2.

4. Un copolymère d'un composé de la revendication 1 ou de la revendication 2 avec de l'acide acrylique, de l'acide méthacrylique, de l'acrylate d'hydroxyéthyle, du méthacrylate d'hydroxyéthyle, du N-méthylol acrylamide, un N-monoalkyl acrylamide, un N-dialkyl acrylamide, un N-monoalkyl méthacrylamide ou un N-dialkylméthacrylamide.

5. Un copolymère d'un composé de la revendication 1 ou de la revendication 2 avec de l'acrylamide.

6. Utilisation d'un composé de la revendication 1 ou de la revendication 2 dans la production d'un copolymère par réaction avec au moins un autre monomère à insaturation oléfinique.

7. Utilisation d'un composé de la revendication 1 ou la revendication 2 selon la revendication 6 où chaque autre monomère à insaturation oléfinique est soluble dans l'eau.

8. Utilisation d'un homopolymère de la revendication 3 ou d'un copolymère de la revendication 4 ou de la revendication 5, pour rendre du papier électroconducteur, en tant qu'agent de ténacité à l'état humide du papier ou en tant qu'agent floculant.

**Revendications pour les Etats contractants: DE, GB, NL**

1. Un copolymère d'un composé de formule I:

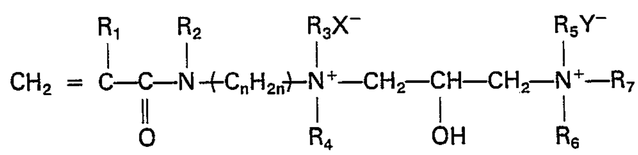

(I)

dans lequel: $R_1$ et $R_2$ sont hydrogène ou méthyle;

$R_3$, $R_4$, $R_5$, $R_6$ et $R_7$ sont des alcoyles identiques ou différents de 1 à 4 atomes de carbone;

n est un nombre entier compris entre 1 et 6; et

X et Y sont des anions identiques ou différents,

avec de l'acrylamide, de l'acide acrylique, de l'acide méthacrylique, de l'acrylate d'hydroxyéthyle, du méthacrylate d'hydroxyéthyle, du N-méthylol acrylamide, un N-monoalkyl acrylamide, un N-dialkyl acrylamide, un N-monoalkyl méthacrylamide ou un N-dialkyl méthacrylamide.

2. Le copolymère de la revendication 1, où le comonomère est de l'acrylamide.

3. Le copolymère de la revendication 1 ou la revendication 2, où X et Y sont des ions halogènes.

4. Un composé de formule I tel que défini à la revendication 1 à condition que lorsque $R_1$, $R_3$, $R_4$, $R_5$, $R_6$ et $R_7$ sont tous du méthyle, $R_2$ est de l'hydrogène et n est 3, alors l'un des anions X ou Y ne soit pas du chlore.

5. Le composé de la revendication 4, où X et Y sont des ions halogènes.

6. Un homopolymère du composé de la revendication 4 ou la revendication 5.

7. Utilisation d'un composé de la formule I défini à la revendication 1 pour la production d'un copolymère par réaction avec au moins un autre monomère à insaturation oléfinique.

8. Utilisation selon la revendication 7, où le ou chaque autre monomère à insaturation oléfinique est soluble dans l'eau.

9. Utilisation d'un homopolymère d'un composé de formule I tel que défini à la revendication 1 ou copolymère selon l'une quelconque des revendications 1 à 3 pour rendre du papier électroconducteur, en tant qu'agent de ténacité à l'état humide du papier ou en tant qu'agent floculant.